# EUROPÄISCHE PATENTSCHRIFT

(11) **EP 1 516 080 B1**
(45) Veröffentlichungstag und Bekanntmachung des Hinweises auf die Patenterteilung: **23.08.2006**
(21) Anmeldenummer: 03735671.4
(22) Anmeldetag: 24.06.2003
(51) Int. Cl.: D03D 47/34, D04B 15/48, G05B 19/042

(54) **FADENVERARBEITENDES SYSTEM UND VERFAHREN ZUM STEUERN UND/ODER ÜBERWACHEN DES SYSTEMS**
THREAD PROCESSING SYSTEM AND METHOD FOR CONTROLLING AND /OR MONITORING THE SYSTEM
SYSTEME DE TRAITEMENT DE FILS ET PROCEDE POUR REGULER ET/OU CONTROLER CE SYSTEME

(30) Priorität: 27.06.2002 DE 10228794
(43) Veröffentlichungstag der Anmeldung: 23.03.2005
(73) Patentinhaber: IROPA AG, 6340 Baar (CH)
(72) Erfinder: RUNDBERG, Thomas, S-434 94 Vallda (SE); JOSEFSSON, Pär, S-502 51 Boras (SE)
(74) Vertreter: Grünecker, Kinkeldey, Stockmair & Schwanhäusser Anwaltssozietät
(86) Internationale Anmeldenummer: PCT/EP2003/006624
(87) Internationale Veröffentlichungsnummer: WO 2004/003274

(56) Entgegenhaltungen:
- EP-A- 0 600 268
- EP-A- 0 752 631
- WO-A-01/31410
- FR-A- 2 736 478
- US-A- 4 965 567
- US-A- 5 246 039
- US-B1- 6 371 169

## Beschreibung

Die Erfindung betrifft ein fadenverarbeitendes System gemäß Oberbegriff des Patentanspruchs 1 und ein Verfahren gemäß Oberbegriff des Patentanspruchs 5.

In fadenverarbeitenden Systemen (z.B. einer Webmaschine mit mehreren Schussfaden-Liefergeräten; z.B. eine Strickmaschine mit mehreren Strickfaden-Liefergeräten) können im Betrieb Alarm oder Statussignale in oder bei den Fadenliefergeräten oder Zubehörgeräten auftreten, die von entsprechend positionierten Signalgebern stammen und unverzögert an die Textilmaschinen-Steuerung zu übertragen sind. Gründe für solche Signale sind beispielsweise ein Fadenbruch, ein nicht korrektes Versorgungsspannungs-Niveau, eine Überhitzungskondition, eine mechanische Blockierung, oder dergleichen. Die Textilmaschinen-Steuerung kann auf ein solches Signal auf unterschiedliche Weise reagieren. Beispielsweise wird die Textilmaschine abgeschaltet. Falls mehrere Fadenliefergeräte die gleiche Fadenqualität liefem, kann die Textilmaschine ihren Betrieb fortsetzen, den gestörten Fadenkanal oder das gestörte Gerät außer Berücksichtigung lassen, und den erforderlichen Faden von einem anderen Fadenliefergerät oder einem Reservefadenliefergerät über einen anderen Fadenkanal abziehen. Darüber hinaus gibt es weitere, von der Textilmaschinen-Steuerung aufgrund eines solchen Signals auszuführende Steuerroutinen, die die unverzögerte Weitergabe der Signale bedingen.

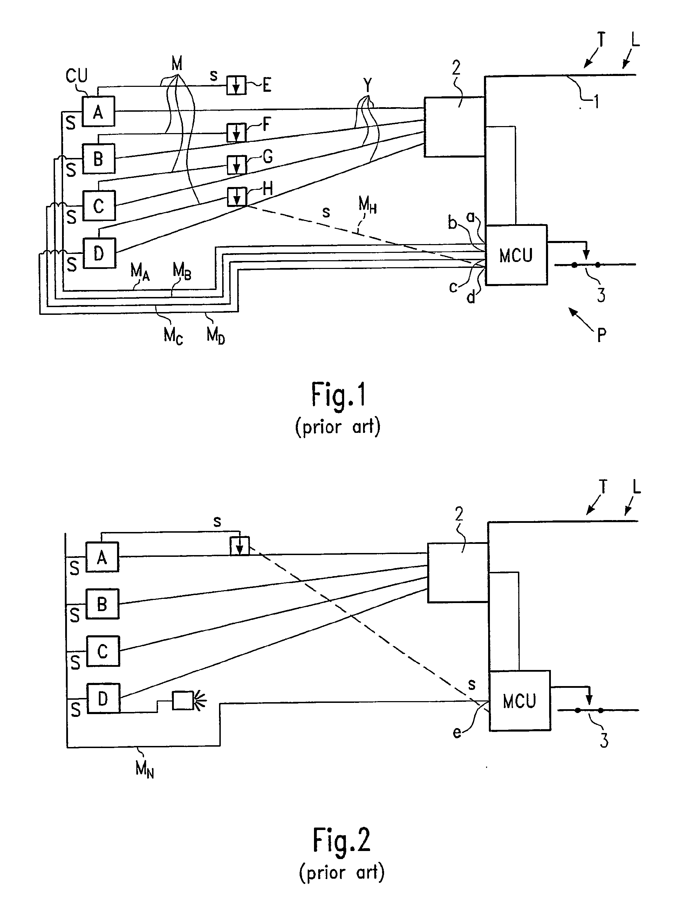

Im Stand der Technik (Fig. 1) ist es bekannt, zur Sicherstellung der unmittelbaren Übertragung jedes Signals eine Signalleitung zwischen jedem Fadenliefergerät und der Textilmaschinen-Steuerung vorzusehen. Beispielsweise anhand der Anschlussstelle der das Signal liefernden Signalleitung an die Textilmaschinen-Steuerung kann diese ermitteln, aus welchem Fadenkanal das erhaltene Signal stammt. Diese Information ist beispielsweise unbedingt erforderlich, falls die Funktion eines gestörten Fadenliefergeräts nach einem Umschaltvorgang durch die Steuerung von einem anderen Fadenliefergerät mit übernommen werden muss. Da die Anzahl der Fadenliefergeräte an der Textilmaschine sehr groß sein kann, und auch weitere, solche Signale emittierende Geräte in das System integriert sein können; ist der Verkabelungsauf wand für die vielen Signalleitungen hoch.

Bei einem anderen fadenverarbeitenden System im Stand der Technik (Fig. 2) ist nur eine einzige Signalleitung vorgesehen, an die sämtliche Fadenliefergeräte bzw. Geräte angeschlossen sind. Da die Textilmaschinen-Steuerung an einem Eingang dann nur untereinander gleiche, anonyme Signale erhält, kann sie keine Entscheidung über den Fadenkanal oder das Fadenliefergerät treffen, von dem das jeweilige Signal stammt. Ein erhaltenes Signal führt zwangsweise zum Abschalten der Textilmaschine, obwohl dies nicht in jedem Fall erforderlich wäre.

In fadenverarbeitenden Systemen, denen ein Kommunikationssystem oder Feldbussystem zugeordnet ist, können solche Signale auch in Form von Nachrichten übertragen werden. Infolge der starken Datenflut in Operation des Systems ist jedoch nicht stets sichergestellt, dass die Signale stets zeitgerecht übertragen werden. Außerdem ist diese Lösung teuer und aufwendig.

Bei einem aus US 6 371 169 B1 bekannten fadenverarbeitenden System entsprechend dem Oberbegriff des Anspruchs 1 ist ein allen Geräten gemeinsamer Datenbus für kodierte Informationssignale vorgesehen. Die Datenstruktur entspricht einen CAN-Protokoll. Es werden Nachrichten übertragen, die mehrere Rahmen und einen Datenteil mit 0 bis 8 Bytes enthalten. Wenn ein Gerät im Falle eines Fadenbruchs ein Unterbrechungssignal an die Steuervorrichtung der Webmaschine überträgt, befiehlt die Webmaschinensteuerung anschließend wenigstens einem anderen Gerät die ersatzweise Fadenlieferung. Diese Lösung ist teuer und aufwendig.

Der Erfindung liegt die Aufgabe zugrunde, ein fadenverarbeitendes System und eine Vorrichtung zum Steuem und/oder Überwachen des Systems anzugeben, die es ermöglichen, mit minimalem Verkabelungsaufwand die Textilmaschinen-Steuerung über die Herkunft der übertragenen Signale zu informieren, so dass die Textilmaschinen-Steuerung jeweils zweckmäßige Steuerroutinen veranlassen kann, und dabei sicherzustellen, dass jedes Signal zeitgerecht übertragen wird.

Die gestellte Aufgabe wird mit den Merkmalen des Anspruchs 1 und verfahrensgemäß mit den Merkmalen des Anspruchs 5 gelöst.

Der Verkabelungsaufwand ist minimal, da nur eine einzige Signalleitung den ggfs. erheblichen Abstand zwischen der Textilmaschinen-Steuerung und den Fadenliefergeräten bzw. der Kodierstation zu überbrücken braucht. Die Textilmaschinen-Steuerung erfährt dennoch mit jedem individuell codierten Signal aus der Signalleitung den Absender und kann dann wenigstens eine in dieser Situation zweckmäßige Steuerroutine veranlassen, durch die z.B. der betroffene Fadenkanal oder das betroffene Gerät aus dem Betrieb genommen und ein anderer Fadenkanal oder ein anderes Fadengerät mit der Aufgabe des gestörten Fadenkanals betraut wird.

Das System ist vorrichtungs- und steuerungstechnisch einfach, da die Signallänge einfach zu modulieren ist und eine klare Aussage zum Absender liefert. Es lässt sich zweckmäßig mit wenig Aufwand eine große Anzahl deutlich unterscheidbarer Kodierungen zur Identifikation vieler Fadenliefergeräte bzw. gegebenenfalls deren Zubehörgeräte nutzen.

Anhand beispielsweise individuell modulierter Signallänge oder von Signalpulsen innerhalb der Signallänge ist mit dem Signal gleich auch der Absender bzw. der betroffene Fadenkanal identifiziert.

Verfahrensgemäß wird jedes anonyme Signal in seiner Signallänge oder mit Signalpulsen innerhalb der Signallänge so moduliert, dass die Textilmaschinen-Steuerung zuverlässig auf das Signal anspricht, und auch das betroffene Gerät bzw. den betroffenen Fadenkanal identifiziert. Die Signalübertragungszeit bleibt optimal kurz. Die Modulation verzögert die Übertragung nicht. Die kodierten Signale sind eindeutig diskriminierbar, selbst wenn Signale von vielen verschieden positionierten Fadenliefergeräten oder Zubehörgeräten oder vielen Fadenkanälen übertragen werden. Als Kodierung wird erfindungsgemäß jeweils eine individuelle Pulslängenmodulation vorgenommen.

Das System könnte ggfs. bidirektional sein, d.h., dass über die Signalleitung, beispielsweise nach einem übertragenen, kodierten Signal, von der Textilmaschinen-Steuerung z.B. ein Empfangs-Bestätigungssignal rückübertragen wird.

Bei einer zweckmäßigen Ausführungsform ist für alle Geräte bzw. Fadenkanäle eine zentrale Kodierstation vorgesehen, zweckmäßigerweise in einer in vielen Fällen ohnedies vorhandenen Steuerbox. An die Steuerbox sind zumindest die Fadenliefergeräte über auch für andere Zwecke erforderliche, relativ kurze Leitungen angeschlossen. Diese Leitungen können als die Signalleitungszweige zum Übertragen der anonymen Signale benutzt werden. Alternativ können relativ kurze, eigene Signalleitungszweige zur Steuerbox führen, die nur zum Übertragen der individuellen Signale benutzt werden.

Die Steuerbox ist vorteilhaft nahe den Liefergeräten positioniert, so dass nur eine einzige Signalleitung für die kodierten Signale über den gegebenenfalls erheblichen Abstand zwischen den Fadenliefergeräten und der Textilmaschinen-Steuerung zu verlegen ist.

Bei einer alternativen Ausführungsform ist für jedes Gerät, vorzugsweise für jedes Fadenliefergerät, eine individuelle Kodiervorrichtung vorgesehen, wobei sämtliche Kodiervorrichtungen gemeinsam die Kodierstation für die einzige Signalleitung bilden. Jede Kodiervorrichtung moduliert vor dem Versenden das anonym eintreffende Signal in seiner Signallänge dem Platz des Absenders im System entsprechend.

Bei der Ausführungsform mit der beispielsweise in einer Steuerbox untergebrachten Kodierstation sind zwischen der Kodierstation und den Geräten mehrere, vorzugsweise den einzelnen Fadenkanälen oder Geräten zugeordnete, Ports für die Signalleitungszweige vorgesehen. Eine in der Kodierstation enthaltene Logikschaltung, beispielsweise ein Mikrokontroller, teilt jedem Port eine individuelle Signallänge zu, mit der das an dem jeweiligen Port eintreffende Signal moduliert wird, ehe es über die Signalleitung übertragen wird. Die anonymen Signale können einfache Signalpulse sein.

Beispielsweise wird innerhalb der Signallänge, die für alle übertragenen Signale gleich ist, ein individueller Signalanfangs- oder Signalendabschnitt jeweils mit einer individuellen und identifizierbaren Länge gebildet. Der Signalbearbeitungsaufwand ist hierbei gering.

Alternativ kann die Signallänge zwischen einem Synchronisier-Signalanfangsabschnitt und einem Signalendabschnitt oder Endpuls individuell eingestellt werden. Die Textilmaschinen-Steuerung bzw. die Dekodierstation erkennt anhand des Zeitfensters zwischen dem Anfangsabschnitt und dem Endabschnitt oder Endpuls oder anhand der Position des Endpulses im Signal, von welchem Absender das moduliert übertragene Signal stammt.

Als weitere Alternative kann das anonyme Signal in einen individuellen binäre Kode gewandelt werden, bestehend aus einer Folge individuell beabstandeter Pulse, die einen lesbaren binären Kode aus Einsen und Nullen ergeben.

Eine weitere Möglichkeit besteht darin, das Signal in eine jeweils individuelle Pufskette zu wandeln, so dass die Dekodierstation durch einfaches Abzählen der Pulse die Information zum Absender als Zählresultat erhält.

Falls in einem fadenverarbeitenden System ohnedies ein Kommunikationssystem vorgesehen ist, innerhalb dessen beispielsweise die Fadenliefergeräte individuelle Adressen haben, können die Dekodiervorrichtungen das Signal als kodiertes bzw. moduliertes Adressensignal übertragen.

Eine steuerungstechnisch einfache Kodierung eines Signals lässt sich sehr einfach über eine Logikschaltung anhand des Eingangsports vornehmen, an welchem das Signal eintrifft. In der Logikschaltung ist jedem Port eine individuelle Signallänge oder Signallängenmodulation zugeteilt, die das Signal zu seiner Übertragung in der Signalleitung zwangsweise erhält. Die ermöglicht die bequeme jederzeitige Erweiterung des Systems durch Hinzunahme oder Wegnahme von Geräten.

Anhand der Zeichnungen werden aus der Praxis bekannte Systeme sowie Ausführungsformen des Erfindungsgegenstandes erläutert. Es zeigen:
- Fig. 1 + 2: fadenverarbeitende Systeme entsprechend dem Stand der Technik,
- Fig. 3: schematisch eine erste Ausführungsform eines erfindungsgemäßen fadenverarbeitenden Systems,
- Fig. 4: eine alternative Ausführungsform eines erfindungsgemäßen fadenverarbeitenden Systems,
- Fig. 5: eine Vorgangsweise zur Modulation zweier von unterschiedlichen Absendern stammender, jeweils individuell kodierter Signale,
- Fig. 6: eine weitere Möglichkeit zur Kodierung von Signalen,
- Fig. 7: eine weitere Möglichkeit zur Kodierung eines Signals, und
- Fig. 8: eine weitere Möglichkeit zur Kodierung eines Signals.

Ein fadenverarbeitendes System P in Fig. 1 (Stand der Technik) umfasst beispielsweise als Textilmaschine T eine Webmaschine L mit einem Webfach 1, einer mehreren Fadenkanälen zugeordneten Fadenselektor-Vorrichtung 2, einer elektronischen Steuerung MCU, und einem Hauptschalter 3. Die Schussfäden Y zieht die Webmaschine L intermittierend und z.B. musterabhängig wahlweise von Fadenliefergeräten A - D ab, wobei den Liefergeräten zusätzliche Zubehörgeräte E - H (mit nicht gezeigten Signalgebern) in jedem Fadenkanal zugeordnet sein können, beispielsweise Fadenbruchdetektoren oder Schussfadenwächter. In den Fadenliefergeräten, die nur durch ihre elektronischen Steuerungen CU symbolisiert sind, können innen oder peripher weitere Signalgeber platziert sein, z.B. Temperatursensoren, Fadenbruchsensoren, Spannungssensoren, und dgl., so dass für jeden Fadenkanal gegebenenfalls mehrere Signalgeber vorgesehen sind, deren jeder ein Alarm- und/oder Statussignal S zu generieren vermag, wenn spontan in diesem Fadenkanal eine Situation auftritt, die zu einem Schaden im System oder einem Gewebefehler führen könnte.

Die Geräte E - H sind über Signalleitungen M an die Steuerungen CU der zugehörigen Fadenliefergeräte A - D angeschlossen. Ferner führt von jedem Fadenliefergerät A - D eine eigene Signalleitung MA, MB, MC, MD zu einem Port a - d der Textilmaschinen-Steuerung MCU. (Gestrichelt ist als Alternative für das Gerät H eine eigene Signalleitung MH beispielsweise auch zum Port d gezeigt.).

Wird auf der Signalleitung MA ein Signal S übertragen, das am Port a eintrifft, dann kann die Textilmaschinen-Steuerung MCU anhand des im Port a eintreffenden Signals S bestimmen, aus welchem Fadenkanal das Signal kommt, und entweder den Hauptschalter 3 trennen, oder die Fadenselektor-Vorrichtung 2 so ansteuern, dass der betroffene Fadenkanal aus dem Betrieb genommen wird und ein anderes der Fadenliefergeräte A - D die Funktion des ausgefallenen Fadenkanals mit übemimmt. Im nicht gezeigten Steuerpaneel der Textilmaschine kann aus dem im Port a eingetroffenen Signal S angezeigt werden, bei welchem Fadenliefergerät die das Signal bewirkende Situation aufgetreten ist. Gegebenenfalls kann die Textilmaschinen-Steuerung MCU über die Signalleitung MA das Fadenliefergerät A und das Zubehörgerät E abschalten.

Da der Abstand zwischen der Textilmaschinen-Steuerung MCU und den Fadenliefergeräten A - D relativ groß ist, ist für die vielen Signalleitungen MA - MD bzw. auch MH erheblicher Verkabelungsaufwand erforderlich, zumal die Anzahl der Fadenliefergeräte und Zubehörgeräte auch deutlich größer sein kann, als in Fig. 1 gezeigt, beispielsweise bei einer Strickmaschine mit mehr als 40 Strickfaden-Liefergeräten und Zubehörgeräten.

Das in Fig. 2 gezeigte, aus der Praxis bekannte fadenverarbeitende System P ist hinsichtlich des Verkabelungsaufinrands zur Übertragung der Signale S deutlich einfacher, weil nur eine einzige Signalleitung Mₙ zwischen den Fadenliefergeräten A - D und der Textilmaschinen-Steuerung MCU verlegt ist. An diese Signalleitung Mₙ sind alle Fadenliefergeräte angeschlossen. Gegebenenfalls weist jedes Fadenliefergerät (gezeigt beim Fadenliefergerät D) eine optische oder akustische Alarmanzeige 4 auf, die aktiviert wird, sobald ein Signal S generiert und übertragen wird. Die Signalleitung Mₙ ist in der Textilmaschinen-Steuerung MCU am Port e angeschlossen, so dass die Textilmaschinen-Steuerung MCU bei Eintreffen eines Signals S keine Information erhält, in welchem Fadenkanal eine das Signal bewirkende Situation aufgetreten ist, denn die Signale S sind untereinander gleich. Die Konsequenz ist, dass die Textilmaschinen-Steuerung MCU bei Eintreffen eines Signals S aus Sicherheitsgründen den Hauptschalter 3 betätigt und die Textilmaschine abstellt, selbst wenn mit einer anderen Steuerroutine eine Fortsetzung des Betriebs möglich wäre.

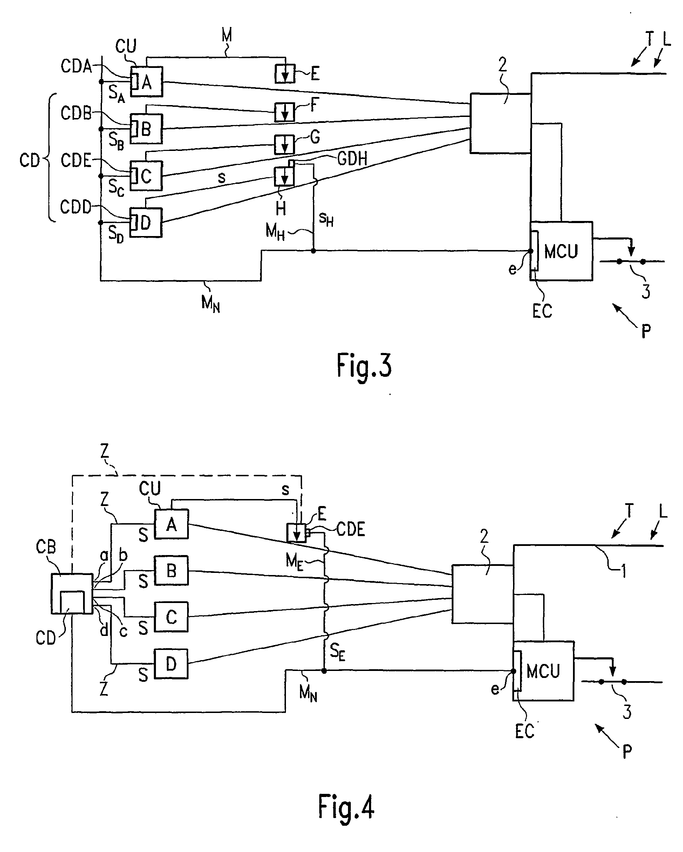

Erfindungsgemäß (Fig. 3 und 4) ist hingegen das jeweilige fadenverarbeitende System P so ausgelegt, dass die Textilmaschinen-Steuerung MCU trotz nur auf einer einzigen Signalleitung Mₙ übertragener, jedoch individuell kodierter Signale erfährt, aus welchem Fadenkanal bzw. von welchem Fadenliefergerät das Signal stammt, so dass es mit der Information über den betroffenen Fadenkanal oder das betroffene Fadenliefergerät A - D zu entscheiden vermag, welche Steuerroutine auszuführen ist, d.h., ob der Hauptschalter 3 zu betätigen ist, oder ob z.B. die Fadenselektor-Vorrichtung 2 zu steuem ist.

Die in oder bei den Fadenliefergeräten A - D vorgesehenen Signalgeber und auch die Signalgeber in den Zubehörgeräten E - H, sind in Fig. 3 und 4 so ausgelegt, dass sie bei Auftreten einer ein Signal hervorrufenden Situation anonyme und z.B. weitgehend gleiche Signale S abgeben. Das jeweilige Signal S wird beispielsweise in Fig. 3 von den Zubehörgeräten E - H über eine kurze Leitung M an die Fadenliefergerät-Steuerung CU übermittelt, die an die Signalleitung Mₙ angeschlossen ist. Alternativ könnte auch (gezeigt beim Zubehörgerät H) wenigstens ein Zubehörgerät direkt an die Signalleitung Mₙ angeschlossen sein.

Um das in der Signalleitung Mₙ übertragene Signal für die Textilmaschinen-Steuerung MCU identifizierbar zu machen, sind an der Seite der Fadenliefergeräte A - D in Fig. 3 einzelne Kodiervorrichtungen CDA, CDB, CDC, CDD, und gegebenenfalls auch bei dem Zubehörgerät H eine eigene Kodiervorrichtung CDH vorgesehen. Die an der Seite der Fadenliefergeräte A - D vorgesehenen Kodiervorrichtungen CDA - CDD, gegebenenfalls zuzüglich CDH, bilden eine Kodierstation CD zum individuellen Kodieren der Signale S.Jede Kodiervorrichtung nimmt eine individuelle Modulation der Signallänge des Signals S vor, so dass die in der Signalleitung Mₙ übertragenen Signale kodierte Signale S_{A} - S_{H} werden, aus denen die Textilmaschinen-Steuerung MCU den Absender oder den betroffenen Fadenkanal identifiziert, obwohl alle Signale am Port e eintreffen. Die Textilmaschinen-Steuerung MCU enthält eine Dekodierstation EC für die kodierten Signale S_{A} - S_{H}.

Das erfindungsgemäße fadenverarbeitende System in Fig. 4 unterscheidet sich von dem der Fig. 3 dadurch, dass die Fadenliefergeräte A - D (und gegebenenfalls sogar auch die Zubehörgeräte E) mit kurzen Signalleitungszweigen Z an eine gemeinsame Kodierstation CD angeschlossen sind, die im gezeigten Fall in einer sogenannten Steuerbox CB der Fadenliefergeräte A - D untergebracht ist. Die Steuerbox CB ist beispielsweise in der Stromversorgungsbox des Fadenliefersystems untergebracht. An die Steuerbox CB sind auch andere Leitungen für andere Zwecke zu bzw. von den Fadenliefergeräten A - D angeschlossen.

Die Signalleitungszweige Z übertragen die Signale S. Jeder Signalleitungszweig Z ist an einem seinem zugeordneten Fadenkanal oder Fadenliefergerät zugeordneten Port a - d der Steuerbox CB bzw. der Kodierstation CD angeschlossen. In der Kodierstation CD ist beispielsweise eine einfache Logikschaltung, z.B. mit einem kleinen Mikrokontroller, enthalten, in der für jeden Port a - d eine individuell wählbare Kodierung des Signals S festgeschrieben ist. Die Zubehörgeräte, beispielsweise das Zubehörgerät E, ist entweder über die Liefergerät-Steuerung CU oder über eine eigenen Signalleitungszweig Z an einem Port der Steuerbox CB angeschlossen. Eine weitere Möglichkeit ist damit angedeutet, dass das Zubehörgerät E eine eigene Kodiervorrichtung CDE besitzt, von der eine Signalleitung M_{E} zum Übertragen eines bereits kodierten Signals SE in die Signalleitung Mₙ ausgeht. Die Textilmaschinen-Steuerung in Fig. 4 erhält so über die einzige Signalleitung Mₙ nur individuell kodierte Signale, die den Absender bzw. den betroffenen Fadenkanal identifizieren.

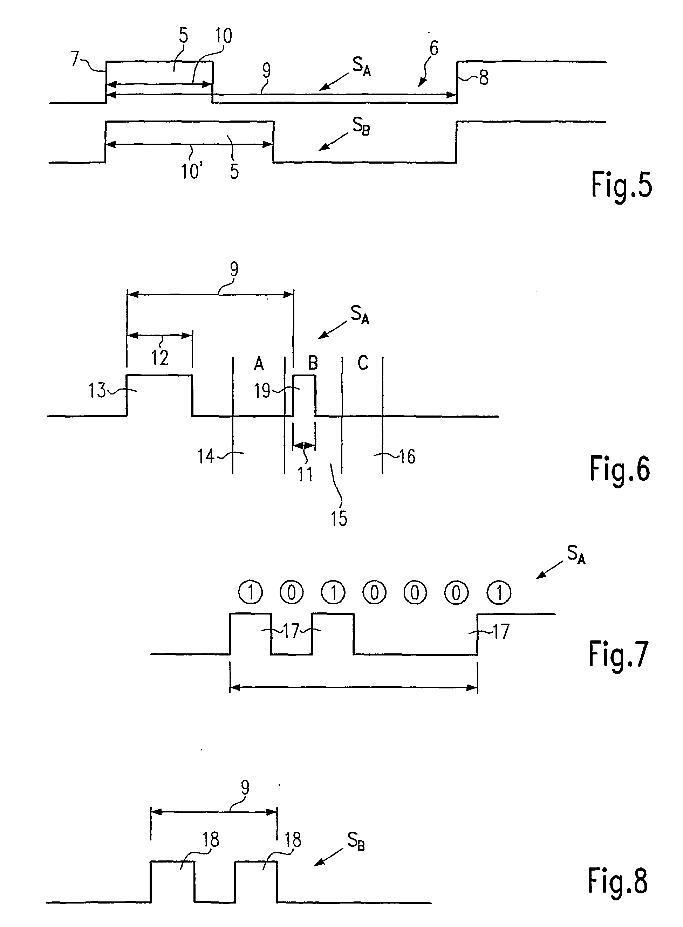

Das vom Signalgeber emittierte Signal ist üblicherweise ein Signalpuls oder eine Signalpulsfolge einer bestimmten Signallänge. Bei der Kodierung wird z.B. die Signallänge moduliert, wie dies anhand der Fig. 5 bis 8 anhand einer nicht beschränkenden Auswahl von Möglichkeiten erläutert wird.

In Fig. 5 stammt der obere Signalzug (das kodierte Signal SA) vom Fadenliefergerät A bzw. dem an dieses angeschlossenen Zubehörgerät E. Das kodierte Signal SA hat zwischen aufeinanderfolgenden Signalanstiegen 7, 8 eine bestimmte Signallänge 9 und innerhalb der Signallänge 9 einen Signalanfangsabschnitt 5 mit einer individuellen Länge 10. Anhand der Länge 10 bestimmt die Textilmaschinen-Steuerung MCU, dass das Signal SA vom Fadenliefergerät A bzw. aus dessen Fadenkanal stammt. Alternativ könnte die Information zum Absender in der individuellen Länge des Signalendabschnittes 6 enthalten sein, oder in dem Längenverhältnis zwischen den Abschnitten 5 und 6.

Der in Fig. 5 untere Signalzug repräsentiert das kodierte Signal SB vom Fadenliefergerät B bzw. aus dessen Fadenkanal, wobei die individuelle Länge 10' des Signalanfangsabschnittes 5 länger (oder kürzer) ist als die Länge 10.

In Fig. 6 ist das kodierte Signal SA vom Fadenliefergerät A bzw. aus dessen Fadenkanal dadurch individuell moduliert, dass der Anfangsabschnitt 13 ein längerer Puls als Synchronisationspuls (bei allen kodierten Signalen gleich) ist, auf den innerhalb der Signallänge 9 ein weiterer, kürzerer Puls 19 mit einer Pulslänge 11 folgt, wobei der Abstand zwischen dem Anfangsabschnitt 13 und dem Puls 19 ein Zeitfenster definiert, das nur dem Fadenliefergerät A angehört. Die Zeitdifferenz zwischen der Länge 9 und der Länge 12 ist kürzer ist als die Summe zweier aufeinanderfolgender Zeitabschnitte 14 und 15. Eine größere Länge 9, die mindestens die Summe der Zeitabschnitte 14 und 15 enthält, jedoch nicht die Summe der Zeitabschnitte 14, 15 und 16 gehört z.B. zum kodierten Signal SB des Fadenliefergeräts B, usw.

In Fig. 7 ist das Signal SA als binärer Kode mit Pulsen 17 moduliert, wobei die Pulse 17 mit ihren Zwischenabständen als Einsen und Nullen lesbar sind.

In Fig. 8 wird das Signal SB für das Fadenliefergerät B als eine Pulskette mit einzelnen Pulsen 18 moduliert, die innerhalb der jeweiligen Signallänge 9 gezählt werden. Das Zählresultat repräsentiert den Absender.

Nur der Vollständigkeit halber wird darauf hingewiesen, dass in solchen Systemen eine Erdungsleitung vorhanden sein sollte. Die Modulation der Signale S resultiert entweder in kodierten Signalen gleicher Länge und wenigstens einem individuellen Signalabschnitt innerhalb der Länge, oder in kodierten Signalen individuell unterschiedlicher Längen mit einzelnen untereinander gleich langen Signalabschnitten oder Pulsen.

## Patentansprüche

1. Fadenverarbeitendes System (P), mit einer Textilmaschine (T), insbesondere einer Webmaschine (L) oder Strickmaschine, der in Fadenkanälen mehrere Fadenliefergeräte und gegebenenfalls zusätzliche Geräte zugeordnet sind, mit elektronischen Steuerungen (MCU, CU) zumindest für die Textilmaschine und die Fadenliefergeräte (A - D), mit Signale (S) generierenden Alarm- und/oder Status-Signalgebern in den oder in den Peripherien der Geräte (A - H), und mit einer einzigen, zur Steuerung (MCU) der Textilmaschine führenden Signalleitung (Mₙ), an die Signalgeber angeschlossen sind, wobei die Textilmaschinen-Steuerung ein übertragenes Signal durch eine Steuer- und/oder Überwachungsroutine berücksichtigt, **dadurch gekennzeichnet, dass** sich die Signalleitung (Mₙ) zwischen einer Kodierstation (CD) zum individuellen Kodieren der Signale zumindest korrespondierend mit dem Fadenkanal des Signalgebers an der Seite der Geräte (A - H) durch Modulieren der Signallänge und/oder wenigstens einer Signalabschnittslänge und/oder eines Längenverhältnisses zwischen bestimmten Signalabschnitten und/oder wenigstens eines Zeitfensters zwischen Signalabschnitten und/oder der Signalpulslänge, und einer Dekodierstation (EC) an der Seite der Textilmaschinen-Steuerung (MCU) erstreckt.

2. Fadenverarbeitendes System nach Anspruch 1, **dadurch gekennzeichnet, dass** eine für alle Geräte (A - H) zentrale Kodierstation (CD) vorgesehen ist, vorzugsweise in einer Steuerbox (CB), an die zumindest die Fadenliefergeräte (A - D) über einzelne Signalleitungszweige für unkodierte anonyme Signale (S) angeschlossen sind.

3. Fadenverarbeitendes System nach Anspruch 1, **dadurch gekennzeichnet, dass** für jedes Gerät (A - H), vorzugsweise für jedes Fadenliefergerät (A - D), eine individuelle Kodiervorrichtung (CDA - CDD, CDH, CDE) vorgesehen ist, und dass die Kodiervorrichtungen insgesamt die Kodierstation (CD) bilden.

4. Fadenverarbeitendes System nach Anspruch 2, **dadurch gekennzeichnet, dass** zwischen der Kodierstation (CD) und den Geräten (A - H) mehrere Ports (a - d) für die Signalleitungszweige (Z) vorgesehen sind, dass die Ports den einzelnen Fadenkanälen oder den Geräten (A - H) zugeordnet sind, dass in der Kodierstation (CD) jedem Port eine individuelle Signallänge zugeteilt ist, und dass die Kodierstation (CD) eine Logikschaltung wie einen Mikrokontroller enthält.

5. Verfahren zum Steuern und/oder Überwachen eines fadenverarbeitenden Systems (P), mit einer Textilmaschine (T), insbesondere einer Webmaschine (L) oder einer Strickmaschine, der in Fadenkanälen mehrere Fadenliefergeräte (A - D) und gegebenenfalls zusätzliche Geräte (E - H) zugeordnet sind, mit elektronischen Steuerungen (CU, MCU) zumindest der Textilmaschine (T) und der Fadenliefergeräte (A - D), mit Signale (S) generierenden Alarm- und/oder Status-Signalgebem in den oder in den Peripherien der Geräte (A - H), und mit einer einzigen, zur Steuerung (MCU) der Textilmaschine (T) führenden Signalleitung (Mₙ), an die Signalgeber angeschlossen sind, **dadurch gekennzeichnet, dass** jedes Signal (S) vor der Übertragung in der Signalleitung (Mₙ) durch Modulieren der Signallänge und/oder von Signalpulsen innerhalb der Signallänge und/oder wenigstens einer Signalabschnittslänge und/oder eines Längenverhältnisses zwischen bestimmten Signalabschnitten und/oder wenigstens einer Signalpulslänge und/oder wenigstens eines Zeitfensters zwischen Signalabschnitten individuell kodiert, in kodierter Form übertragen und in der Textilmaschinen-Steuerung (MCU) anhand der Kodierung identifiziert und dem Signalgeber oder zumindest dessen Fadenkanal zugeordnet wird.

6. Verfahren nach Anspruch 5, **dadurch gekennzeichnet, dass** zur Kodierung die Signallänge zwischen einem gleichbleibenden Synchronisier-Signalanfangsabschnitt (13) und einem Signalendabschnitt (19) durch eine Signalpulspositionsmodulation individuell eingestellt wird.

7. Verfahren nach Anspruch 5, **dadurch gekennzeichnet, dass** zur Kodierung das Signal (S) durch eine PC-Modulationssteuerung in einen individuellen binären Kode (17) gewandelt wird.

8. Verfahren nach Anspruch 5, **dadurch gekennzeichnet, dass** das Signal (S) als eine individuelle Pulskette (18) zählbarer Pulse kodiert wird.

9. Verfahren nach Anspruch 5, **dadurch gekennzeichnet, dass** das Signal (S) eines innerhalb des Systems (P) mit einer Adresse versehenen Gerätes (A - H) entsprechend der Adresse kodiert wird.

10. Verfahren nach Anspruch 5, **dadurch gekennzeichnet, dass** das Signal (S) über eine Logikschaltung anhand des Auftretens des Signals an einem bestimmten Eingangs-Port (a - d) individuell kodiert wird.

## Claims

1. Yarn processing system (P) including a textile machine (T) in particular a weaving machine (L) or a knitting machine to which in yarn channels several yarn feeding units and in some cases additional appliances are associated, comprising electronic control units (MCU, CU) at least for the textile machine and the yarn feeding units (A to D), signal emitters in or at the peripheries of the units and the appliances (A to H) for generating alarm signals and/or status signals (S), and a single signal line (Mₙ) leading to the control unit (MCU) of the textile machine to which single signal line (Mₙ) signal emitters are connected, such that the textile machine control unit considers any transmitted signal by a control routine and/or monitoring routine, **characterised in that** the signal line (Mₙ) extends between a coding station (CD) for individually coding the signals at least corresponding to the yarn channel of the signal emitter at the side of the units or appliances (A to H) by modulating the signal length and/or at least one signal section length and/or a length ratio between certain signal sections and/or at least one time window between signal sections and/or a signal pulse length, and a decoding station at the side of the textile machine control unit (MC).

2. Yarn processing system as in claim 1, **characterised in that** the central coding station (CD) is provided in common for all units and appliances (A to H), preferably in a control box (CB) to which control box (CB) at least the yarn feeding units (A to D) are connected via single signal line branches (Z) for the transmission of uncoded anonymous signals (S).

3. Yarn processing system as in claim 1, **characterised in that** an individual coding device (CDA to CDD, CDH, CDE) is provided for each unit or appliance (A to H), preferably for each yarn feeding unit (A to D), and that the coding devices in their entirety form the coding station (CD).

4. Yarn processing system as in claim 2, **characterised in that** several ports (a to d) are provided for the signal line branches (Z) between the coding station (CD) and the units and the appliances (A to H), which ports are associated to the respective yarn channels or the units or appliances (A to H), that in the coding station (CD) an individual signal length is assigned to each of the ports, and that a logic circuitry like a microcontroller is contained in the coding station (CD).

5. Method for controlling and/or monitoring a yarn processing system, the system (P) comprising a textile machine (T), in particular a weaving machine (L) or a knitting machine, to which in yarn channels several yarn feeding units (A to D) and in some cases additional appliances (E to H) are associated, electronic control devices (MCU, CU) of at least the textile machine (T) and the yarn feeding units (A to D), signal emitters in or at the periphery of the units and appliances (A to H) for generating alarm signals and/or status signals (S), and a single signal line (Mₙ) leading to the control unit (MCU) of the textile machine (T) to which signal line signal emitters are connected, **characterised in that** each signal (S) prior to the transmission is individually coded by modulating the signal length and/or signal pulses within the signal length and/or the length of at least one signal section and/or a length ratio between certain signal sections and/or the length of at least one signal pulse and/or at least one time window between signal sections and is transmitted in coded form and is identified in the textile machine control unit (MCU) with the help of the coding and is then associated to the signal emitter or at least to the yarn channel belonging to the signal emitter.

6. Method as in claim 5, **characterised in that** for coding the signal length between a synchronisation signal starting section (13) which remains equal for all signals, and a signal end section (19) is set individually by signal pulse position modulation.

7. Method as in claim 5, **characterised in that** for coding the signal (S) is converted by a PWC-modulation control into an individual binary code (17).

8. Method as in claim 5, **characterised in that** the signal (S) is coded as an individual pulse chain (18) of countable pulses.

9. Method as in claim 5, **characterised in that** the signal (S) of a unit or appliance (A to H) having an address within the system (P) is coded corresponding with the address.

10. Method as in claim 5, **characterised in that** the signal (S) is individually coded via a logic circuitry evaluating the occurrence of the signal at a certain one of several input ports (a to d).

## Revendications

1. Système (P) de traitement de fils, qui présente une machine textile (T) et en particulier un métier à tisser (L) ou une machine à tricoter auxquels plusieurs appareils de fourniture de fils dans des canaux pour fils et éventuellement des appareils supplémentaires sont associés, le système présentant des commandes électroniques (MCU, CU) au moins pour la machine textile et les appareils (A - D) de fourniture de fils ainsi que des émetteurs de signaux d'alarme et/ou d'état qui créent des signaux (S) et qui sont disposés à la périphérie de l'appareil (A - H), et un seul conducteur de signaux (Mₙ) qui conduit à la commande (MCU) de la machine textile et auquel les émetteurs de signaux sont raccordés, la commande de la machine textile tenant compte d'un signal transmis par l'intermédiaire d'une routine de commande et/ou de surveillance, **caractérisé en ce que** le conducteur de signaux (Mₙ) s'étend entre un poste de codage (CD) qui code les signaux individuellement au moins en correspondance avec le canal pour fils de l'émetteur de signaux situé du côté des appareils (A - H), par modulation de la longueur des signaux et/ou de la longueur d'au moins une partie des signaux et/ou du rapport de longueur entre des parties définies des signaux et/ou d'au moins une fenêtre temporelle entre des parties de signal et/ou de la longueur des impulsions des signaux, et un poste de décodage (EC) disposé sur le côté de la commande (MCU) de la machine textile.

2. Système de traitement de fils selon la revendication 1, **caractérisé en ce qu'**un poste de codage central (CD) est prévu pour tous les appareils (A - H), de préférence dans un boîtier de commande (CB) auquel au moins les appareils (A - D) de fourniture de fils sont raccordés par des ramifications individuelles du conducteur de signaux prévues pour des signaux (S) anonymes et non codés.

3. Système de traitement de fils selon la revendication 1, **caractérisé en ce qu'**un dispositif individuel de codage (CDA - CDD, CDH, CDE) est prévu pour chaque appareil (A - H) et de préférence pour chaque appareil de fourniture de fils (A - D) et **en ce que** les dispositifs de codage forment ensemble le poste de codage central (CD).

4. Système de traitement de fils selon la revendication 2,
**caractérisé en ce que** plusieurs bornes (a - d) sont prévues pour les ramifications (Z) du conducteur de signaux entre le poste de codage (CD) et les appareils (A - H), **en ce que** les bornes sont associées aux canaux individuels pour fils ou aux appareils (A - H), **en ce qu'**une longueur de signal est attribuée dans le poste de codage (CD) à chaque borne et **en ce que** le poste de codage (CD) contient un circuit logique, par exemple un microcontrôleur.

5. Procédé de commande et/ou de surveillance d'un système (P) de traitement de fils, lequel système présente une machine textile (T) et en particulier un métier à tisser (L) ou une machine à tricoter auxquels plusieurs appareils (A - D) de fourniture de fils dans des canaux pour fils et éventuellement des appareils supplémentaires (E - H) sont associés, des commandes électroniques (CU, MCU) au moins pour la machine textile (T) et les appareils (A - D) de fourniture de fils, des émetteurs de signaux d'alarme et/ou d'état qui créent des signaux (S) dans les appareils (A - H) et/ou à la périphérie de ces appareils et un seul conducteur de signaux (Mₙ) qui conduit à la commande (MCU) de la machine textile (T) et auquel les émetteurs de signaux sont raccordés, **caractérisé en ce qu'**avant d'être transmis dans le conducteur de signaux (Mₙ), chaque signal est codé individuellement par modulation de la longueur de signaux et/ou des impulsions des signaux à l'intérieur de la longueur des signaux et/ou de la longueur d'au moins une partie des signaux et/ou du rapport de longueur entre les parties définies des signaux et/ou d'au moins la longueur d'une impulsion des signaux et/ou d'au moins une fenêtre temporelle entre des parties des signaux, est transmis sous forme codée et est identifié dans la commande (MCU) de la machine textile à l'aide de son code et est associé à l'émetteur de signaux ou au moins à son canal pour fils.

6. Procédé selon la revendication 5, **caractérisé en ce que** pour que le codage, la longueur du signal entre une partie initiale constante (13) de synchronisation du signal et une partie finale (19) du signal est réglée individuellement par une modulation de la position des impulsions du signal.

7. Procédé selon la revendication 5, **caractérisé en ce que** pour le codage, le signal (S) est converti en un code binaire individuel (17) par une commande de modulation réalisée sur PC.

8. Procédé selon la revendication 5, **caractérisé en ce que** le signal (S) est codé sous la forme d'une chaîne (18) d'impulsions individuelles qui peuvent être comptées.

9. Procédé selon la revendication 5, **caractérisé en ce que** le signal (S) d'un appareil (A - H) doté d'une adresse à l'intérieur du système (P) est codé en correspondance à son adresse.

10. Procédé selon la revendication 5, **caractérisé en ce que** signal (S) est codé individuellement par un circuit logique sur base de la présence du signal sur une borne d'entrée (a - d) définie.
